# EUROPÄISCHE PATENTSCHRIFT

(11) **EP 0 738 374 B1**
(45) Veröffentlichungstag und Bekanntmachung des Hinweises auf die Patenterteilung: **08.07.1998**
(21) Anmeldenummer: 95933430.1
(22) Anmeldetag: 26.09.1995
(51) Int. Cl.: F16B 12/20

(54) **VERBINDUNGSBESCHLAG**
JOINTING FITTING
FERRURE D'ASSEMBLAGE

(30) Priorität: 04.11.1994 DE 4438919; 15.11.1994 DE 4440726
(43) Veröffentlichungstag der Anmeldung: 23.10.1996
(73) Patentinhaber: MEPLA-WERKE LAUTENSCHLÄGER GmbH & Co. KG, D-64354 Reinheim (DE)
(72) Erfinder: LAUTENSCHLÄGER, Horst, D-64354 Reinheim (DE); LAUTENSCHLÄGER, Gerhard, D-64395 Brensbach-Wersau (DE)
(74) Vertreter: Helber, Friedrich G., Dipl.-Ing.
(86) Internationale Anmeldenummer: EP9503805
(87) Internationale Veröffentlichungsnummer: WO9614513

(56) Entgegenhaltungen:
- DE-A- 2 546 749
- DE-A- 2 546 750
- DE-A- 2 546 751
- DE-U- 9 200 911

## Beschreibung

Die Erfindung betrifft einen Verbindungsbeschlag für Möbelteile, insbesondere von miteinander zu verbindenden plattenförmigen Bauteilen zerlegbarer Möbel mit einem von einem der Möbelteile vortretenden, in einer Aussparung im zweiten Möbelteil einführbaren Bolzen und einem in der Aussparung im zweiten Möbelteil vorgesehenen, am freien Bolzenende angreifenden Spannelement, wobei der Bolzen einer in einer Bohrung eingesetzten Befestigungsbüchse im ersten Möbelteil gehalten ist.

Derartige Verbindungsbeschläge (siehe z.B. DE-A-2 546 750) werden im großen Umfang zur lösbaren Verbindung von Möbel-Außen- oder -Zwischenwänden mit Boden- oder Deckplatten in Schränken verwendet. Um mit solchen Verbindungsbeschlägen die zu verbindenden Möbelteile dauerhaft fest miteinander verspannen zu können und auch - z.B. infolge von Austrocknung auftretenden Schwund und daraus resultierendes - Losewerden ausgleichen zu können, müssen Anzugswege verwirklichbar sein, indem mittels des am zweiten Möbelteil abgestützten Spannelements, z.B. eines Spannexenters, eines Schneckenkörpers oder eines Spannkeils ein Zug auf den im ersten Möbelteil gehaltenen Bolzen ausgeübt wird und so die Möbelteile zusammengezogen werden. Die dabei in den Bolzen eingeleiteten Spannkräfte versuchen, ihn aus der ihn aufnehmenden Befestigungsbohrung herauszuziehen. Um eine sichere Halterung des Bolzens im zugeordneten Möbelteil zu erhalten, werden die früher direkt mit einem Gewinde in das Material des Möbelteils eingeschraubten Bolzen heute in vorzugsweise aus Kunststoff hergestellten, entweder als gegenüber dem Durchmesser ihrer Aufnahmebohrung mit Übermaß bemessene Einschlag- oder Einpreßbuchse oder als durch das Einschraubgewinde des Bolzens selbst spreizdübelartig aufspreizbare Spreizbuchsen eingeschraubt. In beiden Fällen wird zwar versucht, den Widerstand der Buchsen gegen Herausziehen durch im Querschnitt sägezahnförmige Umfangsgrate zu erhöhen, jedoch ist die so erzielbare Festigkeit - insbesondere in Möbelteilen aus Spanplattenmaterial - beschränkt. So ist zu beobachten, daß im Laufe der Zeit bei mehrfachem Auf- und Abbau von mit den bekannten Verbindungsbeschlägen verbundenen Möbelteilen die Befestigungsbohrung aufbrechen oder ausreißen und die betreffenden Schränke bereits nach wenigen Umzügen nicht mehr montierbar sind.

Der Erfindung liegt die Aufgabe zugrunde, bei Verbindungsbeschlägen der hier in Frage stehenden Art die Halterung des im ersten Möbelteil befestigten Bolzens so zu verbessern, daß auch Mehrfachmontagen und Demontagen keine Beschädigungen der Möbelteile im Bereich der Befestigungsbohrung zur Folge hat, wobei aber trotzdem eine einfache und schnelle Montage möglich sein soll. Dabei soll es auch nach dem Öffnen des Verbindungsbeschlags möglich sein, den dann vom zugeordneten Möbelteil vortretenden sperrigen Bolzen ohne Schwierigkeiten abzunehmen und später wieder zu montieren.

Ausgehend von einem Verbindungsbeschlag der eingangs erwähnten Art wird diese Aufgabe erfindungsgemäß dadurch gelöst, daß der in der Befestigungsbuchse zu haltende Endabschnitt des Bolzens exzentrisch zur Bolzenmittelachse versetzt drehbar in einer Aufnahmeöffnung der Befestigungsbüchse und die Aufnahmeöffnung für den zu haltenden Endabschnitt um das gleiche Maß exzentrisch zum Außendurchmesser der Befestigungsbuchse versetzt angeordnet ist, wobei die Exzentrizität des Bolzen-Endabschnitts und der zugehörigen Aufnahmeöffnung in der Befestigungsbüchse so gewählt ist, daß die Aufnahmeöffnung in der Befestigungsbüchse unter Bildung eines schlitzartigen Durchbruchs in der Wandung der Befestigungsbüchse ins Freie schneidet, und daß in dem in der bestimmungsgemäßen Befestigungs-Drehstellung des Bolzens freigeschnittenen Druchbruch stehenden Bereich des Bolzens-Endabschnitt wenigstens eine schneidenartig zugeschärfte, radial vortretende und in Umfangsrichtung verlaufende Verankerungsrippe vorgesehen ist. Durch Verdrehen des Bolzens und somit des exzentrisch an ihm angesetzten Endabschnitts in der Aufnahmeöffnung der Befestigungsbüchse ist es also möglich, den bzw. die schneidenartig zugeschärften Verankerungsrippen wahlweise ins Innere der Befestigungsbüchse zu verdrehen bzw. in den Durchbruch zu stellen, wo sich dann die vom Endabschnitt vortretenden Verankerungsrippen in das Material der umgebenden Befestigungsbohrung im Möbelteil einschneiden. Durch die schneidenartige Ausbildung der Verankerungsrippe(n) können sie auch bei relativ großem radialen Überstand ohne Ausübung einer unzulässig hohen Drehkraft in das umgebende Material das Möbelteil eindringen. Die dabei auftretende Reaktionskraft drängt andererseits die Befestigungsbüchse in dem dem Durchbruch gegenüberliegenden Bereich fest an die Wandung der Bohrung an. Durch Zurückdrehen des Bolzens derart, daß die Verankerungsrippe(n) wieder in die Befestigungsbüchse zurückgedreht werden, wird die durch die Verankerungsrippen erzielte formschlüssige Halterung und durch die Reaktionskraft zusätzlich kraftschlüssige Anpressung in der Bohrung wieder aufgehoben und der Bolzen kann mitsamt der Befestigungsbüchse ohne Schwierigkeiten und ohne Beschädigung der Befestigungsbohrung demontiert werden.

Die Aufnahmeöffnung in der Befestigungsbüchse bildet in zweckmäßiger Ausgestaltung der Erfindung in der Befestigungsbüchse in einem in der Höhenlage zu der bzw. den Verankerungsrippe(n) des Bolzens ausgerichteten Bereich eine Vertiefung in der Innenwand der Befestigungsbüchse, welche so bemessen ist, daß die Verankerungsrippe(n) bei einer Verdrehung des Bolzens in der Vertiefung aufnehmbar ist bzw. sind.

Der Drehwinkel des Endabschnitts des Bolzens in der Befestigungsbüchse ist zweckmäßig derart auf höchstens180° begrenzt, daß die Verankerungsrippe in der ersten Dreh-Endstellung im freigeschnittenen Durchbruch und in der zweiten Dreh-Endstellung in der Vertiefung in der Innenwand der Befestigungsbüchse steht. Die erste Dreh-Endstellung entspricht dann also der Befestigungsstellung des Bolzens, während die zweite Dreh-Endstellung die Montage-/Demontage-Stellung ist.

Am Bolzen-Endabschnitt und in der Befestigungsbüchse können in der ersten Dreh-Endstellung aneinander anliegende Anschlagflächen vorgesehen sein, welche sicherstellen, daß die Verankerungsrippen in der bestimmungsgemäßen Befestigungsstellung exakt im Durchbruch der Befestigungsbüchse stehen und mit maximaler Tiefe in die Wandung der zugehörigen Bohrung einschneiden. Die Vertiefung in der Innenwandung der Befestigungsbüchse ist andererseits zweckmäßig so ausgebildet, daß die Verankerungsrippe(n) in der zweiten Dreh-Endstellung an einer Begrenzungsfläche der Vertiefung anliegt bzw. anliegen. Die Verankerungsrippen bilden dann also zusammen mit der Begrenzungsfläche der Vertiefung den Anschlag für die zweite Dreh-Endstellung.

Um den Bolzen in der Befestigungsbüchse unverlierbar vorzumontieren, empfiehlt es sich, in der Aufnahmeöffnung oder an dem drehbar in der Aufnahmeöffnung gelagerten Endabschnitt des Bolzens jeweils einen in Umfangsrichtung verlaufenden Steg vorzusehen, der formschlüssig in eine in Umfangsrichtung verlaufende Nut mit zum Steg komplementärem Querschnitt des Bolzens bzw. der Aufnahmeöffnung eingreift.

Ein Mitdrehen der Befestigungsbüchse in ihrer Befestigungsbohrung im Möbelteil beim Verdrehen des Bolzens kann dadurch verhindert werden, daß die Befestigungsbüchse auf ihrer Außenfläche mit wenigstens einem parallel zur Bolzen-längsachse verlaufenden vortretenden leistenartigen Vorsprung versehen ist. Vorzugsweise werden zwei oder mehr in Umfangsrichtung versetzt angeordnete leistenartige Vorsprünge vorgesehen, die zweckmäßig einen radial nach außen schneidenartig zugeschäften Querschnitt hat bzw. haben, so daß sie also beim axialen Einführen in die Befestigungsbohrung im Möbelteil etwas ins Material der Bohrungswandung einschneiden.

Zusätzlich empfiehlt es sich, die Befestigungsbüchse auf ihrer Außenfläche mit wenigstens einem, vorzugsweise mehreren, höhenmäßig zueinander versetzten, in Umfangsrichtung verlaufenden langgestreckten Vorsprung bzw. Vorsprüngen zu versehen, welche eine zusätzliche Verankerung der Befestigungsbüchse in der Bohrung bewirken. Dabei kann es zweckmäßig sein, wenn der in Umfangsrichtung verlaufende Vorsprung bzw. die Vorsprünge einen radial nach außen konvex gewölbten Querschnitt aufweist bzw. aufweisen. Diese Vorsprünge sollen dann nicht messerartig in die Wandung der Bohrung einschneiden, sondern eher zu einer Verpressung oder Verdichtung des den Vorsprüngen gegenüberliegenden Wandungsbereichs führen.

Der Befestigungsbolzen kann in an sich bekannter Weise so ausgebildet sein, daß er an seinem dem Endabschnitt abgewandten Endbereich einen im Durchmesser vergrößerten Spannkopf trägt, der an einem demgegenüber im Durchmesser verringerten Halsabschnitt angesetzt ist. Zu solchen Befestigungsbolzen wird als Spannelement in der Regel ein in der Draufsicht zylindrischer, den Spannkopf untergreifender Drehriegel mit einer schraubenförmigen inneren Anzugsfläche verwendet. Zur Montage und Demontage des Bolzens in der zugehörigen Bohrung im Möbelteil ist zweckmäßig in der freien Stirnfläche des Spannkopfs eine Werkzeug-Ansetzausnehmung in Form eines Schraubenzieher-Schlitzes, eines Kreuzschlitzes oder auch einer zum Einsetzen eines Innensechskantschlüssels geeigneten Vertiefung vorgesehen.

Zwischen dem spannkopfabgewandten Ende des Halsabschnitts und dem in der Befestigungsbüchse drehbar gehalterten Endabschnitt ist der Durchmesser des Bolzens bevorzugt im Durchmesser vergrößert, wodurch ein zum Halsabschnitt konzentrischer Zentrierabschnitt entsteht, der z.B. entsprechend dem Durchmesser der von der Stirnfläche des zweiten Möbelteils in die Aussparung geführten Bohrung bemessen ist. Dadurch wird der zweite Möbelteil beim Einführen des Bolzens in diese Bohrung bereits auf dem ersten Möbelteil zentriert. Am Übergang zwischen diesem Zentrierabschnitt und dem exzentrisch zu ihm versetzten Endabschnitt entsteht dann eine Stirnfläche, welche bei der Montage des Bolzens, d.h. wenn der Halsabschnitt exzentrisch zur Befestigungsbohrung versetzt ist, als Tiefenanschlag für die Einführtiefe der Befestigungsbüchse in die zugehörige Bohrung wirkt.

Um die beim Verdrehen des Bolzens aus der Montage-/Demontage-Stellung in die Befestigungsstellung entstehende und die Befestigungsbüchse gegen die Wandung der Befestigungsbohrung spreizende Reaktionskraft zu verstärken, kann es zweckmäßig sein, wenn an dem verdrehbar in der Befestigungsbüchse gelagerten Endabschnitt des Bolzens und der den Endabschnitt aufnehmenden Aufnahmeöffnung der Befestigungsbüchse angeflachte Abschnitte vorgesehen sind, welche in der bestimmungsgemäßen Montage-/Demontage-Drehstellung flächig aneinander anliegen. Beim Verdrehen in die Befestigungsstellung wird die Befestigungsbüchse dann durch den Übertritt der an die Anflachung des Endabschnitts anschließenden im Querschnitt kreisbogenförmig begrenzten Bereiche des Endabschnitts zusätzlich gegen die Wandung der Befestigungsbohrung gepreßt.

Die Befestigungsbüchse ist wiederum bevorzugt als Kunststoff-Spritzgußteil ausgebildet, obwohl grundsätzlich auch eine Herstellung aus Metall denkbar ist.

Die Erfindung ist in der folgenden Beschreibung eines Ausführungsbeispiels in Verbindung mit der Zeichnung näher erläutert, und zwar zeigt:
- Fig. 1: schematisch in einer Schnittansicht die Verbindung von zwei rechtwinklig zusammentreffenden plattenförmigen Möbelteilen durch einen in der erfin-dungsgemäßen Weise ausgebildeten Verbindungsbeschlag;
- Fig. 2: eine Seitenansicht der Befestigungsbüchse des erfindungsgemäßen Befestigungsbeschlags;
- Fig. 3: eine Ansicht der Befestigungsbüchse, gesehen in Richtung der Pfeils 3 in Fig. 2;
- Fig. 4: eine Ansicht der Befestigungsbüchse, gesehen in Richtung des Pfeils 4 in Fig. 2;
- Fig. 5: eine Schnittansicht der Befestigungsbüchse, gesehen in Richtung der Pfeile 5-5 in Fig. 4;
- Fig. 6: eine Schnittansicht, gesehen in Richtung der Pfeile 6-6 in Fig. 5;
- Fig. 7: eine Seitenansicht des in der Befestigungsbüchse gemäß den Fig. 2 bis 6 zu halternden Bolzens;
- Fig. 8: eine in ihrem oberen Endbereich teilweise geschnittene Ansicht des Bolzens, gesehen in Richtung des Pfeils 8 in Fig. 7;
- Fig. 9: eine Ansicht des Bolzens, gesehen in Richtung des Pfeils 9 in Fig. 7;
- Fig. 10: eine Ansicht des Bolzens, gesehen in Richtung des Pfeils 10 in Fig. 8; und
- Fig. 11: eine Schnittansicht, gesehen in Richtung der Pfeile 11-11 in Fig. 7.

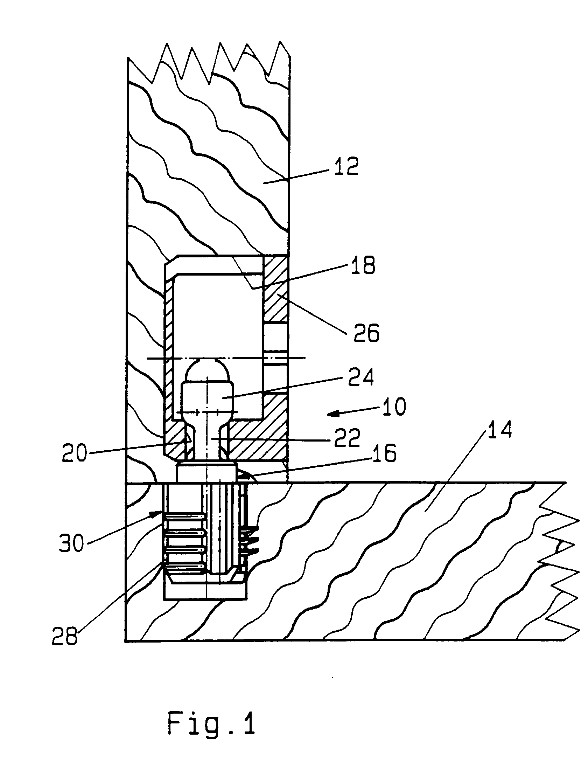

In Figur 1 ist schematisch ein in seiner Gesamtheit mit 10 bezeichneter Verbindungsbeschlag in der bestimmungsgemäßen Verbindungsstellung zweier rechtwinklig zusammentreffender plattenförmiger Möbelteile, beispielsweise einer Schrank-Seitenwand 12 mit einem Schrank-Boden 14 gezeigt. Im Randbereich des Bodens 14 ist ein Bolzen 16 befestigt, der durch eine von der Stirnkante der Seitenwand 12 bis ins Innere einer von der Innenseite aus eingefrästen, in der Draufsicht kreisförmig begrenzte Aussparung 18 geführte Bohrung 20 geführt ist und an seinem in der Aussparung liegenden Ende einen an einem Halsabschnitt 22 angesetzten Spannkopf 24 trägt.

Der Spannkopf 24 liegt in einer - an sich bekannten - Exzenterschnecke 26, welche verdrehbar in der Aussparung 18 angeordnet ist und sie zur Schrank-Innenseite hin verschließt. Die Exzenterschnecke 26 untergreift den Spannkopf 24 beidseitig und übt bei einer Verdrehung in Anzugsrichtung eine zunehmende Zugkraft auf den Bolzen 16 aus, welcher dadurch den Boden 14 gegen die Stirnkante der Seitenwand 12 spannt. Insoweit unterscheidet sich der beschriebene Verbindungsbeschlag nicht grundsätzlich von bekannten Verbindungsbeschlägen.

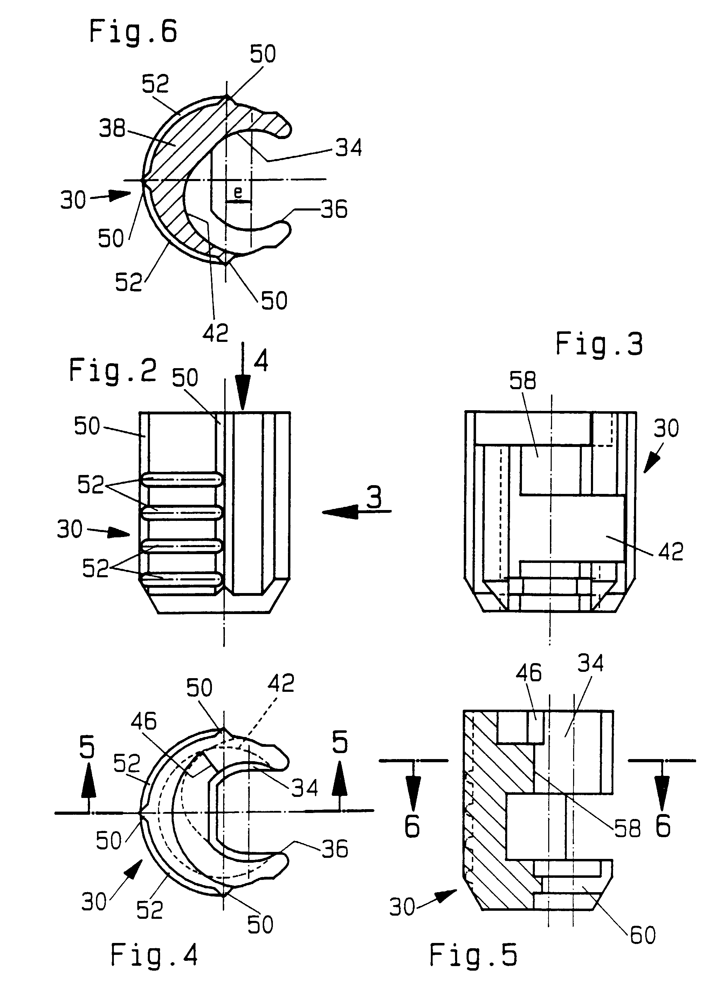

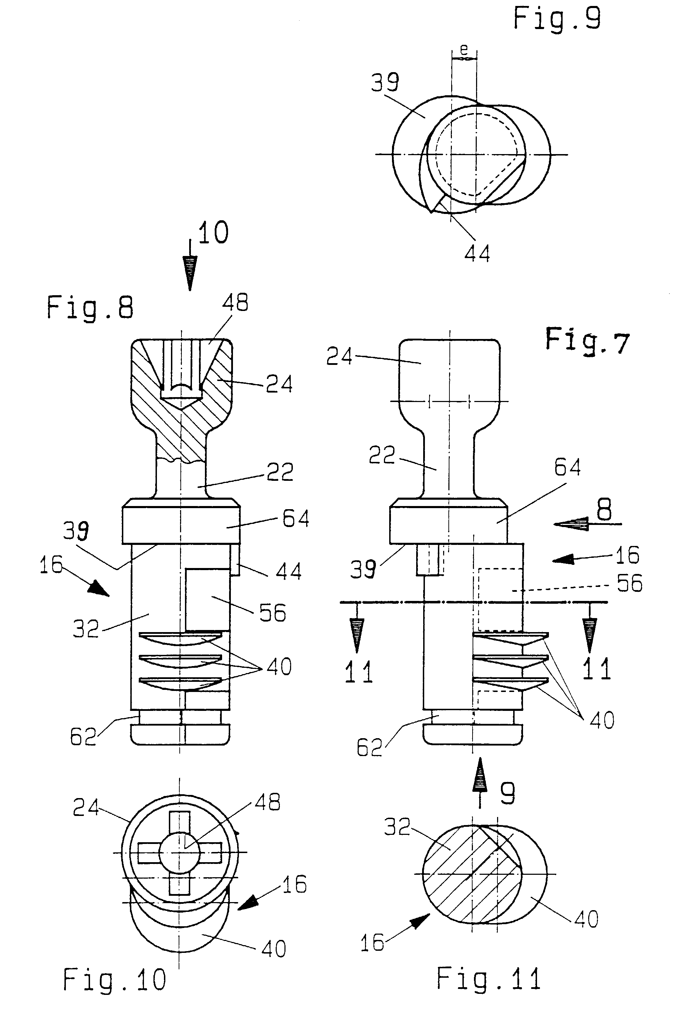

Abweichend ist dagegen die hoch beanspruchbare dabei aber leicht lösbare Befestigung des Bolzens 16 am Boden 14 mittels einer in eine Befestigungsbohrung 28 im Boden 14 einsetzbaren Befestigungsbüchse 30 gelöst. Hierfür sind die - in Fig. 2 bis 6 gesondert gezeigte - Befestigungsbüchse 30 und der in ihr gehaltene Endabschnitt 32 des Bolzens 16 (Fig. 7 bis 11) in spezieller, aneinander angepaßter Weise ausgebildet.

Die im Spritzgußverfahren aus Kunststoff hergestellte Befestigungsbüchse 30 weist eine der Befestigungsbohrung 28 im wesentlichen entsprechende, in der Draufsicht kreisförmig begrenzte äußere Form auf, wobei aber die zur verdrehbaren Aufnahme des grundsätzlich zylindrischen Endabschnitts 32 des Bolzens 16 dienende Aufnahmeöffnung 34 um ein solches Maß "e" exzentrisch zu ihrer Längsmittelachse versetzt ist, daß sie auf einer Seite der Wandung der Befestigungsbüchse schlitzartig ins Freie schneidet, so daß ein Durchbruch 36 entsteht. Entsprechend stärker ist die Wandung der Befestigungsbüchse 30 in dem dem schlitzartigen Durchbruch 36 gegenüberliegenden Wandungsbereich 38.

Der Endabschnitt 32 ist um das gleiche Maß "e" exzentrisch zur Längsmittelachse des Bolzens 16 versetzt, so daß am Übergang zwischen dem in die Bohrung 20 in der Seitenwand 12 eintretenden Teil des Bolzens 16 und dem Endabschnitt 32 eine rechtwinklig zur Bolzenlängsachse verlaufende Stirnfläche 39 (Fig. 7 bis 9) entsteht, welche eine Anschlagfläche bildet, die bei der Montage des drehbar in der Befestigungsbüchse 30 aufgenommenen Endabschnitts 32 in der Befestigungsbohrung 28 die Einführtiefe in die Befestigungsbohrung 28 begrenzt.

Von der Umfangsfläche des Endabschnitts 32 treten - im dargestellten Fall - drei in Höhenrichtung beabstandete, in Umfangsrichtung verlaufende schneidenartig zugeschärfte Verankerungsrippen 40 vor, welche in der Drehstellung des Bolzens 16 in der Befestigungsbüchse 30, in welcher die Exzentrizität "e" des Endabschnitts 32 des Bolzens 16 in die gleiche Richtung weist wie die Exzentrizität "e" der Befestigungsbüchse 30, im Durchbruch 36 stehen und dort noch radial über die zu einem vollen Kreis ergänzte Umfangswandung der Befestigungsbüchse 30 vortreten. In der bestimmungsgemäßen Befestigungsstellung des Verbindungsbeschlages 10 in der Befestigungsbohrung 28 schneiden die Verankerungsrippen 40 also in die Wandung der Befestigungsbohrung 28 ein.

In der zurückgedrehten Stellung des Endabschnitts 32 des Bolzens 16 in der Befestigungsbüchse 30 sind die Verankerungsrippen 40 dagegen in eine die Aufnahmeöffnung 34 im Bereich der Verankerungsrippen erweiternde Vertiefung 42 gestellt, d.h. sie sind ins Innere der Befestigungsbüchse 30 zurückgetreten. Da hierbei dann keine Verankerung in der Wandung der Befestigungsbohrung 28 erfolgt, kann der Bolzen 16 mitsamt der Befestigungsbüchse 30 aus der Befestigungsbohrung herausgezogen werden. Durch Anpassung der Vertiefung 42 in ihrer Größe und Lage an die Lage und Abmessungen der Verankerungsrippen 40 am Endabschnitt 32 bilden die Verankerungsrippen zusammen mit der Vertiefung auch eine die Verdrehung des Bolzens 16 relativ zur Befestigungsbüchse 30 in einer Dreh-Endstellung begrenzenden Anschlag.

Zur Begrenzung des Gesamtdrehwegs des Bolzens 16 auf höchstens 180° - im dargestellten Fall etwa 130° - derart, daß die Verankerungsrippen 40 um das gewünschte radiale Maß aus dem Durchbruch 36 vortreten und in die Wandung der Befestigungsbohrung 28 einschneiden, ist im oberen Bereich des Endabschnitts 32 dicht unterhalb der Stirnfläche 39 an einem Vorsprung des Endabschnitts eine radiale Anschlagfläche 44 vorgesehen, der eine Anschlagfläche 46 im Innern der Befestigungsbüchse zugeordnet ist. In der bestimmungsgemäßen Befestigungsstellung liegen die Anschlagflächen 44 und 46 also aneinander an.

Bei der Befestigung des Endabschnitts 32 in der Befestigungsbohrung 28 muß der Bolzen also aus der zuvor erwähnten die Montage-/Demontage-Stellung darstellenden Dreh-Endstellung in die die Befestigungsstellung darstellende verdrehte Dreh-Endlage gedreht werden, wofür in der freien Stirnfläche des Spannkopfs 24 des Bolzens 16 eine im gezeigten Fall als Aufnahmeöffnung für einen Kreuzschlitz-Schraubenzieher ausgestaltete Werkzeug-Ansetzausnehmung 48 vorgesehen ist, um sicherzustellen, daß beim Verdrehen des Bolzens 16 sich die Befestigungsbüchse 30 nicht mitdrehen kann, sind an deren Außenfläche drei parallel zur Bolzen-Längsachse verlaufende vortretende leistenartige Vorsprünge 50 vorgesehen, die im Querschnitt schneidenartig zugeschärft sind, so daß sie sich beim Einführen in die Befestigungsbohrung 28 mit ihrer Schneide etwas ins Material der Befestigungsbohrung eingraben und so das Mitdrehen der Befestigungsbüchse 30 beim Verdrehen des Bolzens 16 sicher verhindern.

Um die Festlegung des Bolzens 16 in der Befestigungsbohrung über die formschlüssige Halterung der Verankerungsrippen 40 in der umgebenden Wandung der Bohrung 28 hinaus zu verbessern, ist zusätzlich Sorge dafür getragen, daß die beim Eindringen der Verankerungsrippen 40 in die Bohrungswandung entstehenden Reaktionskräfte auf die Befestigungsbüchse 30 übertragen werden. Durch eine Anzahl von höhenmäßig zueinander versetzten, in Umfangsrichtung verlaufenden langgestreckten Vorsprüngen 52 auf der Außenseite der Befestigungsbüchse 30 wird beim Einschneiden der Verankerungsrippen 40 in die Bohrungswandung entstehende Reaktionskraft dazu benutzt, um die - im gezeigten Fall - im Querschnitt konvex gewölbten Vorsprünge etwas ins Material der Bohrungswandung einzudrücken und so eine zusätzliche Halterung auch der Befestigungsbüchse 30 gegen Herausziehen zu bewirken.

Zur Verstärkung dieser Reaktionskraft ist in zwei in der Montagestellung einander gegenüberliegenden Bereichen des Endabschnitts 32 des Bolzens 16 einerseits und der Aufnahmeöffnung 34 der Befestigungsbüchse 30 andererseits je ein angeflachter Abschnitt 56 bzw. 58 vorgesehen. In der Montage-/Demontage-Stellung liegen die angeflachten Abschnitte 56 und 58 also aneinander an. Beim Verdrehen des Bolzens 16 kommt dann der an den angeflachten Abschnitt 56 anschließende kreisbogenförmig begrenzte Bereich des Endabschnitts 32 an dem angeflachten Abschnitt 58 zur Anlage, wodurch der Endabschnitt 32 und die Befestigungsbüchse 30 zusätzlich in einer rechtwinklig zur Bolzen-Längsachse verlaufenden Ebene auseinandergedrängt und in der Befestigungsbohrung 28 festgelegt werden.

Zur Vormontage der Befestigungsbüchse 30 auf dem Endabschnitt 32 des Bolzens 16 ist in der Aufnahmeöffnung 34 in deren unterem Endbereich ein in Umfangsrichtung verlaufender Steg 60 vorgesehen, dem eine entsprechende Nut 62 im Endabschnitt 32 des Bolzens zugeordnet ist. Der in die Nut 62 eingreifende Steg 60 sichert den Bolzen 16 zusätzlich gegen Herausziehen aus der Befestigungsbüchse 30 in Bolzen-Längsrichtung.

Insbesondere in den Figuren 7 und 8 ist noch erkennbar, daß zwischen dem Halsabschnitt 22 und dem Endabschnitt 32 des Bolzens 16 ein im Durchmesser gegenüber dem Halsabschnitt vergrößerter, konzentrisch zu ihm angeordneter Zentrierabschnitt 64 vorgesehen ist, dessen Durchmesser etwa dem Durchmesser der Bohrung 20 entspricht, so daß also der vortretende Teil des Bolzens 16 beim Einführen in die Bohrung 20 durch den Zentrierabschnitt 64 in der Bohrung 20 spielfrei ausgerichtet wird.

## Patentansprüche

1. Verbindungsbeschlag (10) für Möbelteile, insbesondere von miteinander zu verbindenden plattenförmigen Bauteilen (12; 14) zerlegbarer Möbel mit einem von einem der Möbelteile (14) vortretenden, in eine Aussparung (18) im zweiten Möbelteil (12) einführbaren Bolzen (16) und einem in der Aussparung (18) im zweiten Möbelteil (12) vorgesehenen am freien Bolzenende (24) angreifenden Spannelement (26), wobei der Bolzen in einer in eine Bohrung (28) eingesetzten Befestigungsbüchse (30) im ersten Möbelteil (14) gehalten ist, wobei
der in der Befestigungsbüchse (30) zu haltende Endabschnitt (32) des Bolzens (16) exzentrisch zur Bolzenmittelachse versetzt drehbar in einer Aufnahmeöffnung (34) der Befestigungsbüchse (30) angeordnet ist,
die Aufnahmeöffnung (34) für den zu haltenden Endabschnitt (32) um das gleiche Maß ("e") exzentrisch zum Außendurchmesser der Befestigungsbüchse (30) versetzt angeordnet ist,
die Exzentrizität des Bolzen-Endabschnitts (32) und der zugehörigen Aufnahmeöffnung (34) in der Befestigungsbüchse (30) so gewählt ist, daß die Aufnahmeöffnung (34) in der Befestigungsbüchse (30) unter Bildung eines schlitzartigen Durchbruchs (36) in der Wandung der Befestigungsbüchse (30) ins Freie schneidet, und
in dem in der bestimmungsgemäßen Befestigungs-Drehstellung des Bolzens (16) im freigeschnittenen Durchbruch (36) stehenden Bereich des Bolzen-Endabschnitts (32) wenigstens eine schneidenartig zugeschärfte, radial vortretende und in Umfangsrichtung verlaufende Verankerungsrippe (40) vorgesehen ist.

2. Verbindungsbeschlag nach Anspruch 1, dadurch gekennzeichnet, daß die Aufnahmeöffnung (34) in der Befestigungsbüchse (30) in einem in der Höhenlage zu der bzw. den Verankerungsrippe(n) (40) des Bolzens (16) ausgerichteten Bereich eine Vertiefung (42) in der Innenwand der Befestigungsbüchse (30) bildet, welche so bemessen ist, daß die Verankerungsrippe(n) (40) bei einer Verdrehung des Bolzens (16) in der Vertiefung (42) aufnehmbar ist bzw. sind.

3. Verbindungsbeschlag nach Anspruch 2, dadurch gekennzeichnet, daß der Drehwinkel des Endabschnitts (32) des Bolzens (16) in der Befestigungsbüchse (30) derart auf höchstens 180° begrenzt ist, daß die Verankerungsrippe(n) (40) in der ersten Dreh-Endstellung im freigeschnittenen Durchbruch (36) und in der zweiten Dreh-Endstellung in der Vertiefung (42) in der Innenwand der Befestigungsbüchse (30) steht.

4. Verbindungsbeschlag nach Anspruch 3, dadurch gekennzeichnet, daß am Bolzen-Endabschnitt (32) und in der Befestigungsbüchse (30) in der ersten Dreh-Endstellung aneinander anliegende Anschlagflächen (44; 46) vorgesehen sind.

5. Verbindungsbeschlag nach Anspruch 3 oder 4, dadurch gekennzeichnet, daß die Vertiefung (42) in der Innenwand der Befestigungsbüchse (30) so ausgebildet ist, daß die Verankerungsrippe(n) (40) in der zweiten Dreh-Endstellung an einer Begrenzungsfläche der Vertiefung (42) anliegt bzw. anliegen.

6. Verbindungsbeschlag nach einem der Ansprüche 1 bis 5, dadurch gekennzeichnet, daß in der Aufnahmeöffnung (34) oder an dem drehbar in der Aufnahmeöffnung gelagerten Endabschnitt (32) des Bolzens (16) jeweils ein in Umfangsrichtung verlaufender Steg (60) vorgesehen ist, der formschlüssig in eine in Umfangsrichtung verlaufende Nut (62) mit zum Steg (60) komplementärem Querschnitt im Endabschnitt (32) des Bolzens (16) bzw. der Aufnahmeöffnung (34) eingreift.

7. Verbindungsbeschlag nach einem der Ansprüche 1 bis 6, dadurch gekennzeichnet, daß die Befestigungsbüchse (30) auf ihrer Außenfläche mit wenigstens einem parallel zur Bolzen-längsachse verlaufenden vortretenden leistenartigen Vorsprung (50) versehen ist.

8. Verbindungsbeschlag nach Anspruch 7, dadurch gekennzeichnet, daß zwei oder mehr in Umfangsrichtung auf der Außenfläche der Befestigungsbüchse (30) versetzt angeordnete leistenartige Vorsprünge (50) vorgesehen sind.

9. Verbindungsbeschlag nach Anspruch 7 oder 8, dadurch gekennzeichnet, daß der Vorsprung (50) bzw. die Vorsprünge (52) einen radial nach außen schneidenartig zugeschärften Querschnitt hat bzw. haben.

10. Verbindungsbeschlag nach einem der Ansprüche 1 bis 9, dadurch gekennzeichnet, daß die Befestigungsbüchse (30) auf ihrer Außenfläche mit wenigstens einem, vorzugsweise mehreren höhenmäßig zueinander versetzten in Umfangsrichtung verlaufende langgestreckten Vorsprung bzw. Vorsprüngen (52) versehen ist.

11. Verbindungsbeschlag nach Anspruch 10, dadurch gekennzeichnet, daß der in Umfangsrichtung verlaufende Vorsprung bzw. die Vorsprünge (52) einen radial nach außen konvex gewölbten Querschnitt aufweist bzw. aufweisen.

12. Verbindungsbeschlag nach einem der Ansprüche 1 bis 11, dadurch gekennzeichnet, daß der Bolzen (16) an seinem dem Endabschnitt (32) abgewandten Endbereich einen im Durchmesser vergrößerten Spannkopf (24) trägt, der an einem dem Spannkopf (24) gegenüber im Durchmesser geringeren Halsabschnitt (22) ausgebildet ist.

13. Verbindungsbeschlag nach Anspruch 12, dadurch gekennzeichnet, daß in der freien Stirnfläche des Spannkopfs (24) eine Werkzeug-Ansatzausnehmung (48) vorgesehen ist.

14. Verbindungsbeschlag nach Anspruch 12 oder 13, dadurch gekennzeichnet, daß zwischen dem spannkopfabgewandten Ende des Halsabschnitts (22) und dem in der Befestigungsbüchse drehbar gehaltene Endabschnitt (32) ein gegenüber dem Halsabschnitt (22) im Durchmesser vergrößerter und konzentrisch zum Halsabschnitt (22) angeordneter Zentrierabschnitt (64) vorgesehen ist.

15. Verbindungsbeschlag nach einem der Ansprüche 1 bis 14, dadurch gekennzeichnet, daß an dem verdrehbar in der Befestigungsbüchse (30) gelagerten Endabschnitt (32) des Bolzens (16) und der den Endabschnitt (32) aufnehmenden Aufnahmeöffnung (34) angeflachte Abschnitte (56; 58) vorgesehen sind, welche in der bestimmungsgemäßen Montage/Demontage-Drehstellung flächig aneinander anliegen.

16. Verbindungsbeschlag nach einem der Ansprüche 1 bis 15, dadurch gekennzeichnet, daß die Befestigungsbüchse (30) als Kunststoff-Spritzgußteil ausgebildet ist.

## Claims

1. Jointing fitting (10) for furniture components, particularly panel-shaped components (12; 14), which are to be connected together, of flatpack furniture, including a peg (16), which projects from one of the furniture components (14) and may be introduced into a recess (18) in the second furniture component (12), and a clamping element (26), which is provided in the recess (18) in the second furniture component (12) and engages the free end (24) of the peg, the peg being held in a fastening bush (30), inserted into a bore (28) in the first furniture component (14), whereby
the end section (32), which is to be held in the fastening bush (30), is arranged eccentrically offset with respect to the central axis of the peg so as to be rotatable in a receiving opening (34) in the fastening bush (30),
the receiving opening (34) for the end section (32) which is to be held is arranged eccentrically offset by the same amount ("e") with respect to the external diameter of the fastening bush (30),
the eccentricity of the end section (32) of the peg and the associated receiving opening (34) in the fastening bush (30) is so selected that the receiving opening (34) in the fastening bush (30) opens out into the atmosphere whilst forming a slit-like opening (36) in the wall of the fastening bush (30), and
provided in the region of the end section (32) of the peg situated in the free-cut opening (36), in the intended rotational fastened position of the peg (16) there is at least one anchoring rib (40), which projects radially and extends in the peripheral direction and is sharpened in the manner of a knife blade.

2. Jointing fitting as claimed in Claim 1, characterised in that in a region in the vertical position aligned with the anchoring rib(s) (40) on the peg (16) the receiving opening (34) in the fastening bush (30) defines a recess (42) in the inner wall of the fastening bush (30) which is so dimensioned that the anchoring rib(s) (40) is or are receivable in the recess (42), when the peg (16) is rotated.

3. Jointing fitting as claimed in Claim 2, characterised in that the angle of rotation of the end section (32) of the peg (16) in the fastening bush (30) is limited to at most 180° such that the anchoring rib(s) (40) is situated, in the first rotational end position, in the free-cut opening (36) and, in the second rotational end position, in the recess (42) in the inner wall of the fastening bush (30).

4. Jointing fitting as claimed in Claim 3, characterised in that abutment surfaces (44; 46) which engage one another in the first rotational end position are provided on the end section (32) of the peg and in the fastening bush (30).

5. Jointing fitting as claimed in Claim 3 or 4, characterised in that the recess (42) in the inner wall of the fastening bush (30) is so constructed that the anchoring rib(s) (40) engages or engage a boundary surface of the recess (42) in the second rotational end position.

6. Jointing fitting as claimed in one of Claims 1 to 5, characterised in that provided in the receiving opening (34) or on the end section (32) of the peg, which is rotatably mounted in the receiving opening, there is a web (60) which extends in the peripheral direction and engages in a form-locking manner in a groove (62), extending in the peripheral direction, with a cross-section complementary to the web (60), in the end section (32) of the peg (16) or of the receiving opening (34).

7. Jointing fitting as claimed in one of Claims 1 to 6, characterised in that the fastening bush (30) is provided on its external surface with at least one projecting, ridge-like projection (50) extending parallel to the longitudinal axis of the peg.

8. Jointing fitting as claimed in Claim 7, characterised in that two or more ridge-like projections (50) are provided offset in the peripheral direction on the external surface of the fastening bush (30).

9. Jointing fitting as claimed in Claim 7 or 8, characterised in that the projection (50) or the projections has or have a cross-section which is sharpened radially outwardly in the manner of a knife blade.

10. Jointing fitting as claimed in one of Claims 1 to 9, characterised in that the fastening bush (30) is provided on its external surface with at least one elongate projection, preferably a plurality of vertically offset elongate projections (52), extending in the peripheral direction.

11. Jointing fitting as claimed in Claim 10, characterised in that the projection extending in the peripheral direction or the projections (52) has or have a radially outwardly convexly domed cross-section.

12. Jointing fitting as claimed in one of Claims 1 to 11, characterised in that on its end region remote from the end section (32) the peg (16) carries a gripping head (24) of enlarged diameter which is constructed on a neck section (22) of smaller diameter with respect to the gripping head (24).

13. Jointing fitting as claimed in Claim 12, characterised in that a tool attachment recess (48) is provided in the free end surface of the gripping head (24).

14. Jointing fitting as claimed in Claim 12 or 13, characterised in that provided between the end of the neck section (22) remote from the gripping head and the end section (32) rotatably held in the fastening bush there is a centering section (64), which is of enlarged diameter with respect to the neck section (22) and is arranged concentrically with the neck section (22).

15. Jointing fitting as claimed in one of Claims 1 to 14, characterised in that provided on the end section (32) of the peg (16), which is rotatably mounted in the fastening bush (30) and the receiving opening accommodating the end section (32) there are flattened sections (56, 58) which flatly engage one another in the intended assembly/disassembly rotational position.

16. Jointing fitting as claimed in one of Claims 1 to 15, characterised in that the fastening bush (30) is constructed as an injection moulded plastics component.

## Revendications

1. Ferrure de liaison (10), pour pièces de meuobles, en particulier de composants (12; 14) sous forme de plaques à relier ensemble appartenant à des meubles démontables, avec une vis (16), faisant saillie depuis l'une des pièces de meuble (14), susceptible d'être introduite dans un évidement (18) ménagé dans la deuxième pièce de meuble (12), et un élément de serrage (26), prévu dans l'évidement (18) ménagé dans la deuxième pièce de meuble (12) et agissant sur l'extrémité libre (24) de la vis, la vis étant maintenue dans la première pièce de meuble (14), dans une douille de fixation (30), insérée dans un perçage (28), où
la section d'extrémité (32), à fixer dans la douille de fixation (30), de la vis (16) est disposée de façon à pouvoir tourner de façon excentrée par rapport à l'axe du goujon, dans une ouverture de réception (34) de la douille de fixation (30),
l'ouverture de réception (34) destinée à la section d'extrémité (32) à fixer est disposée de façon décalée, excentrée par rapport au diamètre extérieur de la douille de fixation (30), de la même distance ("e"),
l'excentricité de la section d'extrémité (32) de la vis et de l'ouverture de logement (34) afférente dans la douille de fixation (30) est choisie telle que l'ouverture de réception (34) ménagée dans la douille de fixation (30) coupe dans l'espace, en formant un passage (36) du genre d'une fente, dans la paroi de la douille de fixation (30), et
dans la zone de section d'extrémité (32) de la vis qui est située dans la position en rotation de fixation nominale de la vis (16) dans le passage (36) à découpure libre, est prévu au moins une nervure d'ancrage (40), avivée comme un tranchant et faisant saillie radialement et s'étendant en direction périphérique.

2. Ferrure de liaison selon la revendication 1, caractérisée par le fait que l'ouverture de réception (34) ménagée dans la douille de fixation (30) constitue, dans une zone alignée en position en hauteur par rapport à la ou aux nervures(s) d'ancrage (40) de la vis (16), un creusement (42) dans la paroi intérieure de la douille de fixation (30), creusement qui est dimensionné de manière que la ou les nervure(s) d'ancrage (40) est, respectivement sont, susceptible(s) d'être logée(s) dans le creusement (42) lors d'une rotation de la vis (16).

3. Ferrure de liaison selon la revendication 2, caractérisée par le fait que l'angle de rotation de la section d'extrémité (32) de la vis (16) dans la douille de fixation (30) est limité à une valeur maximale de 180°, de manière que, dans la première position finale en rotation, la ou les nervures(s) d'ancrage (40) se trouve(nt) dans le passage (36) à découpure libre et que dans la deuxième position finale de rotation, elle(s) se trouve(nt) dans le creusement (42) ménagé dans la paroi intérieure de la douille de fixation (30).

4. Ferrure de liaison selon la revendication 3, caractérisée par le fait que des surfaces de butée (44; 46) appuyant l'une sur l'autre sont prévues sur la section d'extrémité (32) et dans la douille de fixation (30), dans la première position finale en rotation.

5. Ferrure de liaison selon la revendication 3 ou 4, caractérisée par le fait que le creusement (42) ménagé dans la paroi intérieure de la douille de fixation (30) est réalisé de manière que la ou les nervures d'ancrage (40) appuie(nt) sur une surface de limitation du creusement (42), lorsqu'on se trouve dans la deuxième position finale en rotation.

6. Ferrure de liaison selon l'une des revendications 1 à 5, caractérisée par le fait que, dans l'ouverture de réception (34) ou sur la section d'extrémité (32) montée à rotation dans l'ouverture (32) de réception de la vis est chaque fois prévu une nervure (60), s'étendant dans la direction périphérique et s'engageant, avec ajustement de forme, dans une gorge (62) s'étendant en direction périphérique, avec une section transversale, complémentaire de la nervure (60), dans la section d'extrémité (32) de la vis (16), respectivement de l'ouverture de réception (34).

7. Ferrure de liaison selon l'une des revendications 1 à 6, caractérisée par le fait que la douille de fixation (30) est pourvue, sur sa surface extérieure, d'au moins une saillie (50) du genre d'une bande, se projetant en s'étendant parallèlement à l'axe longitudinal de la vis.

8. Ferrure de liaison selon la revendication 7, caractérisée par le fait que sont prévues deux saillies (50), ou plus, du genre d'une bande, disposées de façon décalée sur la surface extérieure de la douille de fixation (30).

9. Ferrure de liaison selon la revendication 7 ou 8, caractérisée par le fait que la saillie (50), respectivement les saillies (52) a, respectivement ont, une section transversale avivée du genre d'un tranchant, dans la direction radiale vers l'extérieur.

10. Ferrure de liaison selon l'une des revendications 1 à 9, caractérisée par le fait que la douille de fixation (30) est pourvue, sur sa surface extérieure, d'au moins une saillie, de préférence de plusieurs saillies (52), allongées, s'étendant dans la direction périphérique et décalées en hauteur les unes par rapport aux autres.

11. Ferrure de liaison selon la revendication 10, caractérisée par le fait que la saillie, respectivement les saillies (52) s'étendant dans la direction périphérique présente, respectivement présentent, une section transversale à courbure convexe dans la direction radiale vers l'extérieur.

12. Ferrure de liaison selon l'une des revendications 1 à 11, caractérisée par le fait que la vis (16) porte, sur sa zone d'extrémité opposée à la section d'extrémité (32), une tête de serrage (24) à diamètre agrandi, réalisée sur une section de col (22) à diamètre inférieur à celui de la tête de serrage (24).

13. Ferrure de liaison selon la revendication 12, caractérisée par le fait qu'un évidement pour appendice d'outil (48) est prévu dans la surface frontale libre de la tête de serrage (24).

14. Ferrure de liaison selon la revendication 12 ou 13, caractérisée par le fait que, entre l'extrémité, opposée à la tête de serrage, de la section de col (22) et la section d'extrémité (32), maintenue avec possibilité de rotation dans la douille de fixation, est prévu une section de centrage (64), à diamètre supérieur à celui de la section de col (22) et disposée concentriquement par rapport à la section de col (22).

15. Ferrure de liaison selon l'une des revendications 1 à 14, caractérisée par le fait que, sur la section d'extrémité (32), montée avec possibilité de rotation dans la douille de fixation (30), de la vis (16) et l'ouverture de réception (34), recevant la section d'extrémité (32), sont prévues des sections à méplats (56; 58), appuyant les unes sur les autres sur toute leur surface lorsqu'on se trouve dans la position en rotation de montage/démontage nominale.

16. Ferrure de liaison selon l'une des revendications 1 à 15, caractérisée par le fait que la douille de fixation (30) est réalisée sous la forme d'une pièce moulée par injection, en matière plastique.
